(19) Europäisches Patentamt
European Patent Office
Office européen des brevets

(11) **EP 2 667 472 A1**

(12) **EUROPEAN PATENT APPLICATION**
published in accordance with Art. 153(4) EPC

(43) Date of publication:
**27.11.2013 Bulletin 2013/48**

(51) Int Cl.:
**H02J 3/00** *(2006.01)*        **G06Q 10/00** *(2012.01)*
**G06Q 50/00** *(2012.01)*

(21) Application number: **11856526.6**

(22) Date of filing: **31.08.2011**

(86) International application number:
**PCT/JP2011/069781**

(87) International publication number:
**WO 2012/098729 (26.07.2012 Gazette 2012/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.01.2011 JP 2011008382**

(71) Applicant: **Hitachi, Ltd.
Tokyo 100-8280 (JP)**

(72) Inventors:
• **TAKAHASHI Hirotaka**
  **Hitachi-shi**
  **Ibaraki 319-1292 (JP)**
• **TOMITA Yasushi**
  **Hitachi-shi**
  **Ibaraki 319-1292 (JP)**
• **KAWAMURA Hideyuki**
  **Hitachi-shi**
  **Ibaraki 319-1293 (JP)**
• **OGAWA Jumpei**
  **Tokyo 140-8572 (JP)**

(74) Representative: **Beetz & Partner
Patentanwälte
Steinsdorfstrasse 10
80538 München (DE)**

(54) **POWER DEMAND REGULATION APPARATUS, POWER REGULATION NETWORK SYSTEM, AND POWER REGULATION METHOD**

(57)    A power demand regulating apparatus is provided which can efficiently achieve the purpose of peak shift in a power system and which can reduce the total incentive which an operator of a demand regulation server distributes to consumers having cooperated with a request for regulating an amount of energy to be used. A demand regulation server (0101) is provided with a cooperation level determining function (0111) of calculating a cooperation level which is obtained by quantifying the height of a cooperation sense of a consumer with a request for regulating an amount of energy to be used. The operator of the demand regulation server observes consumers or consumer appliances responding to the request for regulating an amount of energy to be used on the basis of the magnitude of the cooperation level and transmits the request to only the consumers or the consumer appliances.

[FIG. 1]

**Description**

Technical Field

The present invention relates to a power demand regulating apparatus, a power regulating network system, and a power regulating method.

Background Art

In order to realize lasting comfortable societies, smart grid techniques have been developed all over the world for the purpose of adaptation to a low-carbon society based on power distribution, enhancement in stable supply, and enhancement in economic feasibility. As a kind of wide-ranging smart grid technique, a demand-side management technique is known which can achieve alleviation of load concentration in a power system or utilization of surplus power based on distributed power sources by requesting consumers to change operating statuses of equipped appliances. For example, such a demand-side management technique is described in PTL 1. In this technique, when a time zone in which a load concentration in a power system is predicted is present in the future such as a next day, consumers are requested to reduce the amount of energy to be used. An incentive such as a discount of power charge is given as a payback to the consumers having changed the use of energy to another time zone in response to the request. This technique is characterized in that the consumers are requested to reduce the amount of energy to be used on the basis of information on appliances and time zones. For example, the details are "If the tomorrow operating time of a dishwasher is changed to 10 to 11 O'clock, the unit power price is changed to a relatively cheap price, * yen". By materializing the request details, consumers can easily respond to the request and it is thus possible to shift the peak of a load concentration in a power system with a high expected value.

Citation List

Patent Literature

PTL 1: JP-A-2007-334523

Summary of Invention

Technical Problem

However, in the above-mentioned technique, all consumers are requested. Therefore, when all the consumers are requested to reduce the amount of energy to be used and consumers much more than initially assumed respond to the request as a result, there is a problem in that the amount of energy to be used is reduced more than necessary, the use of energy is concentrated on another time zone, and the effect of peak shift is not satisfactory. An object of the present invention is to solve this problem.

Solution to Problem

In order to achieve the above-mentioned object, the invention has a configuration in which consumers who are requested to change setting states of appliances out of ranked consumers are selected on the basis of the ranks of the ranked consumers.

Advantageous Effects of Invention

According to the present invention, it is possible to realize an appropriate peak shift. Other objects, features, and advantages of the present invention will become apparent from the following description of embodiments of the present invention with reference to the accompanying drawings.

Brief Description of Drawings

Fig. 1 is a diagram illustrating an embodiment of the present invention.
Fig. 2 is a flowchart illustrating a necessary regulation value calculating function 0106.

Fig. 3 is a diagram illustrating an image of a necessary regulation value calculating process.

Fig. 4 is a diagram illustrating a format in which a necessary regulation value is recorded.

Fig. 5 is a diagram illustrating a format in which a predicted value of a power demand is recorded.

Fig. 6 is a flowchart illustrating an appliance regulation capability calculating function.

Fig. 7 is a diagram illustrating a format in which an appliance regulation capability is recorded.

Fig. 8 is a flowchart illustrating a regulation request creating function.

Fig. 9 is a diagram illustrating a sequence of influence levels on the quality of life based on activation or deactivation of a consumer appliance.

Fig. 10 is a diagram illustrating a format in which a consumer appliance cooperation level is recorded.

Fig. 11 is a diagram illustrating a process of accumulating a regulation capability with respect to a necessary regulation value.

Fig. 12 is a diagram illustrating a format of a request record database.

Fig. 13 is a flowchart illustrating a method of calculating a cooperation rate on the basis of the ratio of the number of times of cooperation to the previous request.

Fig. 14 is a diagram illustrating a data format of a power demand record database 0102.

Fig. 15 is a diagram illustrating a format in which incentive information to be given to consumers based on cooperation with a demand regulation request is recorded.

Fig. 16 is a flowchart illustrating a method of setting the height of a cooperation sense of a consumer as an index.

Fig. 17 is a flowchart illustrating a function of counting the number of times of monitor display in a consumer terminal.

Fig. 18 is a diagram illustrating an image of a cooperation rate distribution in a community to which a consumer belongs.

Fig. 19 is a diagram illustrating an image of information of acquired incentive point account of a consumer.

Description of Embodiments

An embodiment of the present invention will be described below.

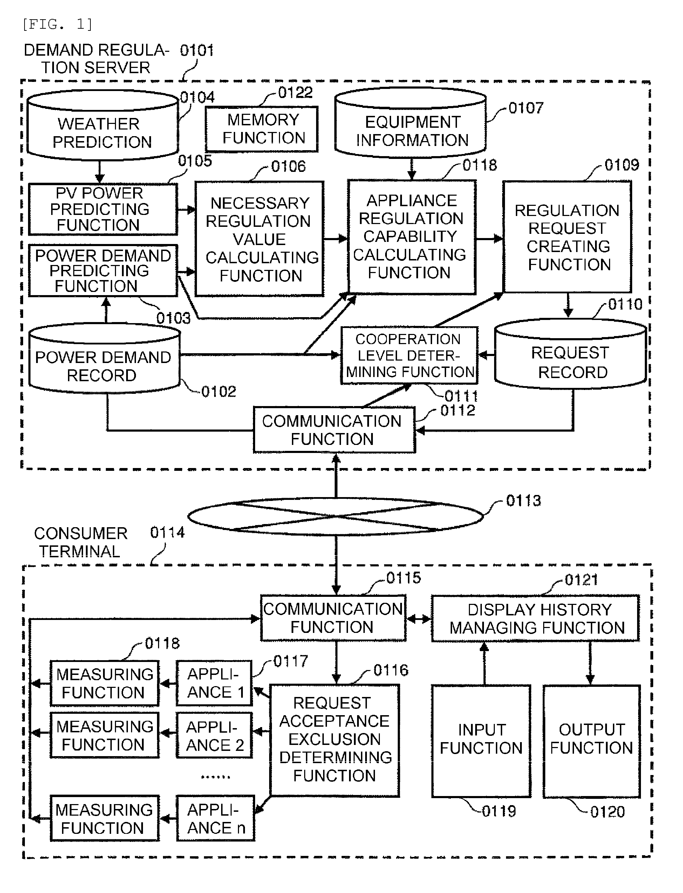

Fig. 1 is a diagram illustrating a configuration for embodying the present invention.

Reference numeral 0101 represents a demand regulation server which includes a function database to be described below. The demand regulation server 0101 can be embodied by a general-purpose server device.

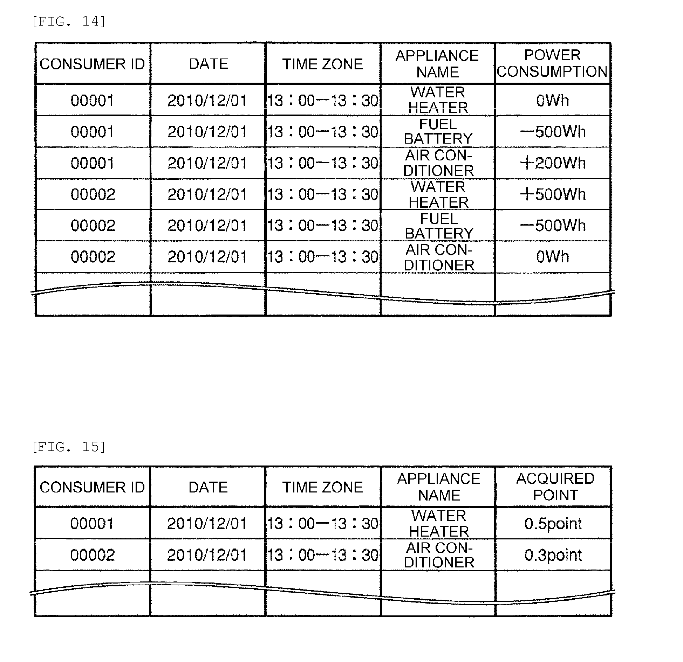

Reference numeral 0102 represents a power demand record database on which record values [Wh] of power consumption by consumers, by appliances, and by time zones are recorded. This information is normally transmitted from a consumer-side measuring function 0118 through the use of a communication function 0112. The format of the power demand record database 0102 has the same structure as shown in Fig. 14 and information such as consumer ID, date, time zone, appliance name, and power consumption are stored therein.

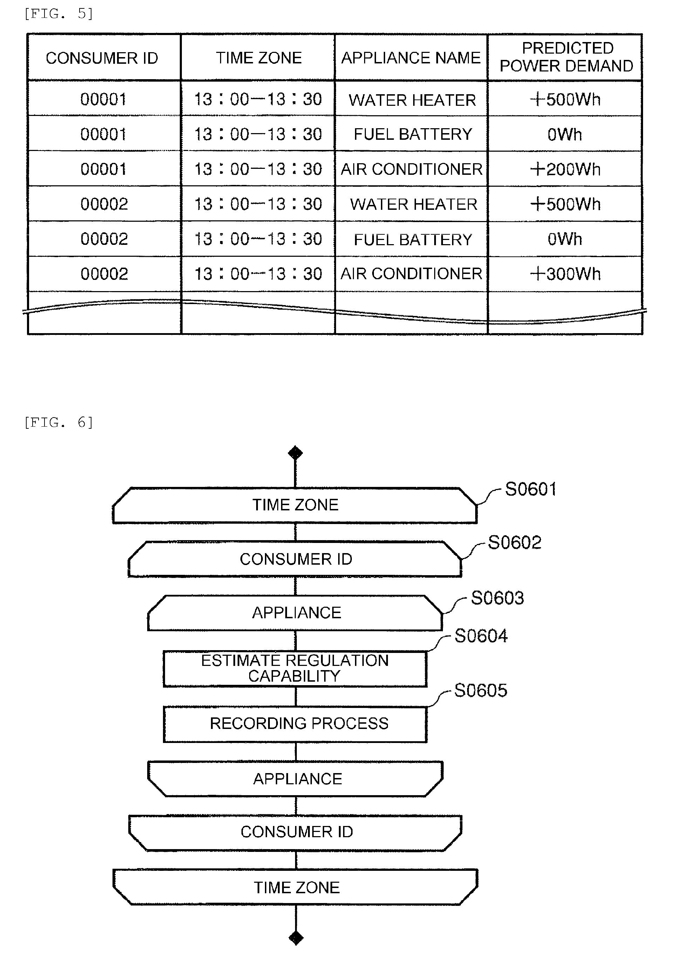

Reference numeral 0103 represents a power demand predicting function which predicts a power demand [Wh] by consumers, appliances, and time zones (for example, every 30 minutes) of the next day on the basis of the information of the power demand record database 0102. As the prediction method, a method of calculating an average value of previous power consumption by appliances and time zones or the like can be considered. The prediction result is stored in a memory function in the format shown in Fig. 5. The sign of the predicted value of the power demand is defined with a load increasing direction as plus when seen from a power system.

Reference numeral 0104 represents a weather prediction database in which records of previous weather information or predicted weather information of the next day are recorded by time zones (for example, every 30 minutes). Weather type (such as clear, cloudy, and rainy) or the duration of sunshine for each time zone is recorded in the weather information.

Reference numeral 0105 represents a PV (Photovoltaic) power predicting function which is a function of predicting photovoltaic power generated for each time zone (for example, every 30 minutes) of the next day on the basis of information such as the duration of sunshine recorded in the weather prediction database 0104. A method expressed by Expression 1 or the like can be considered as the method of predicting the photovoltaic power. Instead of PV or in addition to PV, a power generator using natural energy such as wind power generation other than PV may be used.

[Math. 1]

$$P_{pv}(t) = P_{pv}0(t) \times T(t)/W \qquad \text{Expression 1}$$

Here, $P_{pv}(t)$ represents a predicted value of the photovoltaic power [Wh] generated in time zone t of the next day, $P_{pv}0(t)$ represents a predicted value of the photovoltaic power [Wh] generated in a clear weather in time zone t of the next day and is information recorded in advance on a memory not shown, $T(t)$ represents a duration of sunshine [h] per 30 minutes in time zone t of the next day and is information recorded on the weather prediction database 0104, and W represents a time width [h] (30 minutes) of each time zone.

Reference numeral 0106 represents a necessary regulation value calculating function, which calculates a demand regulation value of the overall community on the basis of a predicted power demand value obtained by adding a predicted power demand value of each consumer, which is obtained by adding predicted power demand values of consumer appliances, over the consumers of the community, a value obtained by adding the predicted value of the photovoltaic power generated from each consumer over the overall community, and predetermined upper and lower threshold values of the power demand in a power distribution system.

Reference numeral 0107 represents an equipment information database in which information such as rated power of appliances (such as home appliances) of the consumers is stored.

Reference numeral 0108 represents an appliance regulation capability calculating function which calculates a variation in power demand (= demand regulation capability) when a deactivated appliance is activated (demand stimulation) or when an activated appliance is deactivated (demand restraint).

Reference numeral 0109 represents a regulation request creating function which creates regulation request information including consumer appliances to be requested to regulate the demand, the setting method ("deactivating" or "activating") thereof, and information of incentive points given to a consumer when the consumer responds to the request.

Reference numeral 0110 represents a request record database which is a database on which previous regulation request information to the consumers is recorded.

Reference numeral 0111 represents a cooperation level determining function which is a function of quantifying the height of a cooperation sense with a demand regulation request for each consumer.

Reference numeral 0112 represents a communication function which is a function of communicating with a consumer terminal installed for each consumer in a community.

Reference numeral 0122 is a memory function which is a function of temporarily storing information.

Reference numeral 0113 represents a communication network, which may employ the Internet, a mobile phone network, independent communication means, and the like.

Reference numeral 0114 represents a consumer terminal. The consumer terminal may employ various devices such as a PC, a mobile phone, and an independent terminal.

Reference numeral 0115 represents a communication function which is a function of communicating with the communication function 0112 of the demand regulation server 0101.

Reference numeral 0116 represents a request acceptance exclusion determining function which is a device that analyzes the regulation request information transmitted from the demand regulation server and automatically changes operation setting of an appliance which is requested to regulate the power demand. In addition to a method of automatically changing the setting of a consumer appliance on the basis of the regulation request information transmitted from the demand regulating function, a consumer may visually confirm details of the regulation request output by the display function (output function) 0120 and may change the appliance setting depending on the consumer's own determination.

Reference numeral 0117 represents a consumer appliance which may employ a water heater, a fuel battery, or an air conditioner.

Reference numeral 0118 represents a measuring function which is a function of measuring power consumption for each consumer appliance.

Reference numeral 0119 represents an input function which is means for allowing a consumer to manipulate the consumer terminal thereof.

Reference numeral 0120 represents a display function which is means for providing a consumer with information from the consumer terminal.

Reference numeral 0121 represents a display history managing function which is a function of counting the number of times of a consumer's display on a monitor of the consumer terminal and transmitting the counted value to the demand regulation server.

The necessary regulation value calculating function 0106, the appliance regulation capability calculating function 0108, the regulation request creating function 0109, the cooperation level determining function 0111, and the display history managing function 0121, which are functions requiring particular explanation, will be described below.

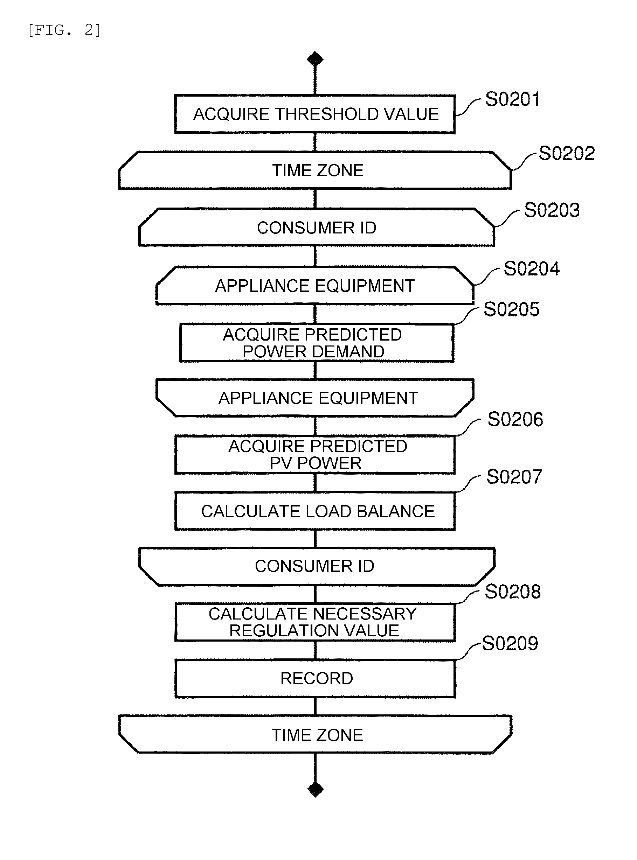

First, the necessary regulation value calculating function 0106 will be described with reference to Figs. 2, 3, and 4.

Fig. 2 is a flowchart illustrating the necessary regulation value calculating function 0106.

S0201 represents a process of acquiring a threshold value used to calculate a necessary regulation value. The threshold value includes upper and lower threshold values of power demand in a power distribution system, and may be set on the basis of equipment capacity of the power distribution system or may be set on the basis of other conditions.

S0202 represents a time zone loop process. In this example, the loop process is performed in the order of 00:00 to 00:30, 00:30 to 01:00, ... with 30 minutes as the time width.

S0203 represents a consumer ID loop process. In this example, it is assumed that an ID is allocated to each consumer. Numbers based on the connection relationship to the power distribution system are sequentially given as the consumer IDs.

S0204 represents an appliance equipment loop process, in which appliance demand prediction information output from the power demand predicting function 0103 of Fig. 1 is sequentially acquired in a predicted power demand acquiring process of S0205.

S0206 represents a PV (photovoltaic) power prediction acquiring process in which a predicted value of photovoltaic power generated by consumers and by time zones and predicted in the PV power predicting function 0105 of Fig. 1 is acquired.

S0207 represents a load balance calculating process. Here, a load balance is defined as "power demand after the generated photovoltaic power is cancelled". A load balance calculating expression is expressed by Expression 2.

[Math. 2]

$$P(t) = \sum_{j\ consumer} \left( \sum_{appliance\ name} Phe(t) \right) - \sum_{consumer} P_{pv}(t) \qquad \text{Expression 2}$$

Here, P(t) represents the load balance [Wh] (by time zones) over the overall community on the next day, Phe (t) represents a predicted value [Wh] of a consumer appliance power demand on the next day, and $P_{pv}$(t) represents a predicted value [Wh] (by time zones) of the photovoltaic power generated for each consumer on the next day.

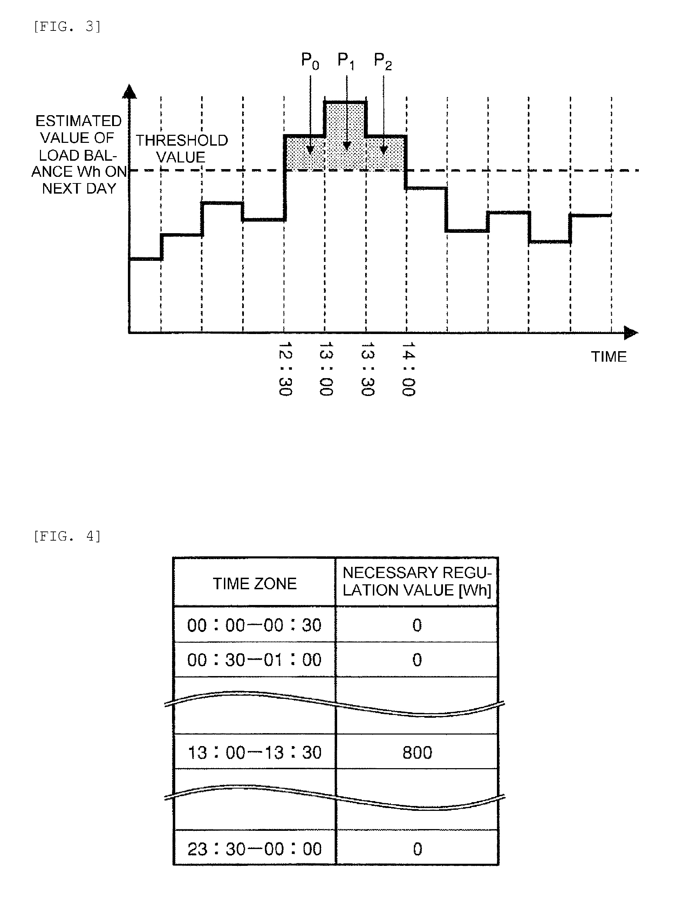

S0208 represents a necessary regulation value calculating process. The necessary regulation value is defined as a departing value when the load balance departs from the threshold value. The necessary regulation value will be described below with reference to Fig. 3.

Fig. 3 is a diagram illustrating an image of a necessary regulation value. The horizontal axis represents the time which is partitioned every time zone (30 minutes). The vertical axis represents the predicted value of the load balance on the next day. Here, an example where the load balance departs from the threshold value from 12:30 to 14: 00 is shown. Here, the necessary regulation value is indicated by hatched areas P0, P1, and P2.

Description will be made below with a focus on the necessary regulation value P1 of 13:00 to 13:30.

Referring to Fig. 2 again, S0209 represents a necessary regulation value recording process. The necessary regulation value calculated in S0208 is stored in the recording function in the format shown in Fig. 4. This format is defined by time zones and necessary regulation values. Here, the necessary regulation value P1 of 13:00 to 13:30 is assumed to be 800 [Wh], for the purpose of convenience of explanation.

Referring to Fig. 1 again, 0108 represents an appliance regulation capability calculating function. The flowchart of this function is shown in Fig. 6.

S0601 represents a time zone loop process. Here, the loop process is performed in the order of 00:00 to 00: 30, 00:30 to 01:00, ... with 30 minutes as the time width.

S0602 represents a consumer ID loop process. The method of setting the consumer ID is the same as described in S0203.

S0603 represents an appliance loop process in which the types of the consumer appliance such as a water heater, a fuel battery, and a storage battery are sequentially set.

S0604 represents a regulation capability estimating process. The regulation capability is defined as an increase in power demand (possible demand stimulation) [Wh] when a deactivated appliance is activated or a decrease in power demand (possible demand restraint) [Wh] when an activated appliance is deactivated. Here, for example, the possible demand stimulation or the possible demand restraint is calculated as follows.

(1) Method of Calculating Possible Demand Stimulation

As for an appliance predicted to be deactivated in a certain time zone of the next day by the power demand predicting function 0103, the power consumption calculated from the rated power information recorded in the equipment information database 0107 is considered as the possible demand stimulation [Wh].

(2) Method of Calculating Possible Demand Restraint

As for an appliance predicted to be activated in a certain time zone of the next day by the power demand predicting function 0103, the predicted value of power demand at the time of activation is considered as the possible demand restraint [Wh]. The predicted value of power demand at the time of activation can be acquired by statistically processing the record information of the power demand record database 0102.

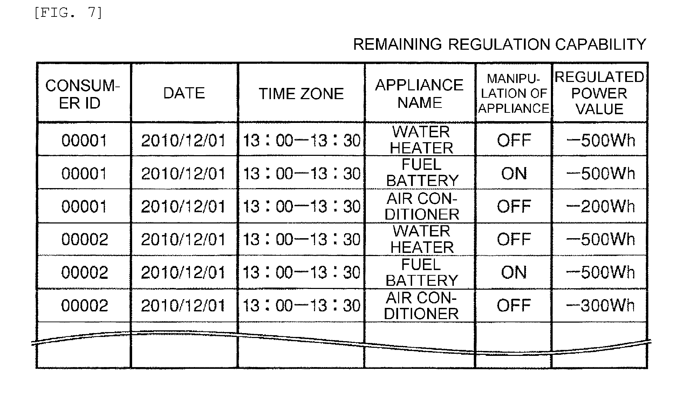

S0605 represents a recording process. In the recording process S0605, the calculated appliance regulation capability is arranged in the format shown in Fig. 7 and is recorded in the memory function 0122. An example of the recorded details is shown in Fig. 7. Data in the first line shows that the prediction of the regulated power value due to turning off a water heater for 13: 00 to 13:30 on December 1, 2010 by a consumer with an ID of 0001 is a decrease of 500 Wh. The sign of the regulated power value is defined with a load increasing direction as plus when seen from a power system. Data in the second line or subsequent lines thereof are analyzed in the same way.

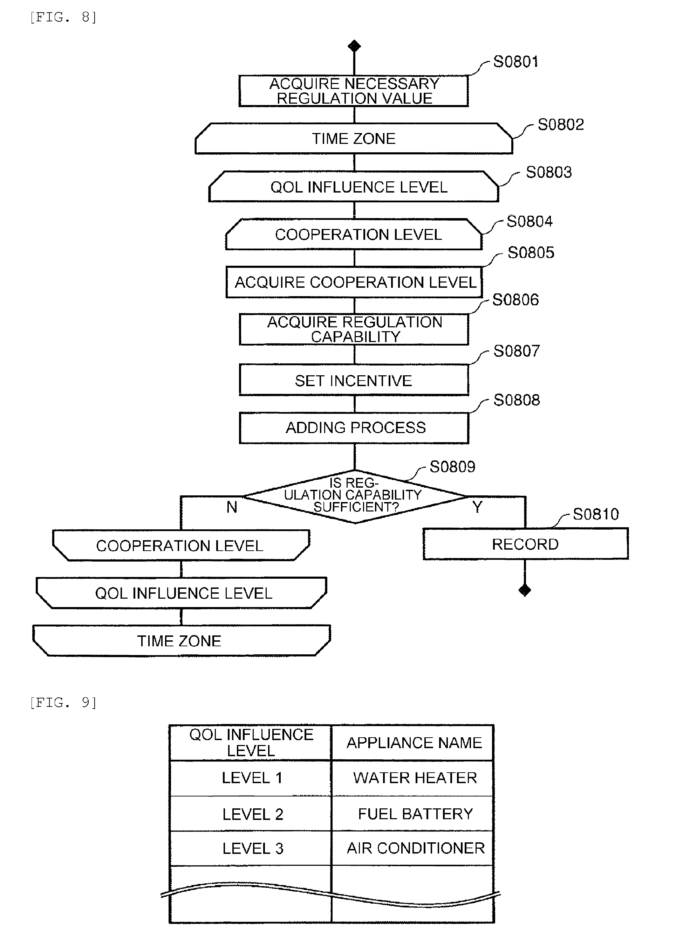

Referring to Fig. 1 again, reference numeral 0109 represents a regulation request creating function. The processing details of this function will be described below with reference to Figs. 8, 9, 10, 11, and 12.

Fig. 8 is a flowchart illustrating the regulation request creating function.

S0801 represents a necessary regulation value acquiring process. The necessary regulation value information is information in the table shown in Fig. 4.

S0802 represents a loop process by time zones. Here, the loop process is performed in the order of 00:00 to 00:30, 00:30 to 01:00, ... with 30 minutes as the time width.

S0803 represents a loop process by QOL influence levels. Here, QOL means "quality of life". In the present invention, as shown in Fig. 9, the ranks of the appliance types are determined in the order of decreasing the influence on the quality of life of a consumer based on activation or deactivation of the appliances. In the example shown in Fig. 9, the appliance of "level 1" of which the influence on the quality of life of the consumer is the smallest is set to "activation or deactivation of a water heater", the appliance of level 2 is set to "activation or deactivation of a fuel battery", and the appliance of level 3 is set to "activation or deactivation of an air conditioner". Therefore, in the loop process by QOL levels of S0803 of Fig. 8, the loop process is performed in the order of "water heater", "fuel battery", and "air conditioner".

Referring to Fig. 8 again, S0804 represents a loop process by cooperation levels. Details of the cooperation level will be described later, but is information obtained by quantifying the height of a cooperation sense with a demand regulation request and is in the range of 1.0 to 0.0. In the loop process by cooperation levels of S0804, the values are set in the descending order of 1.0, 0.9, 0.8, ....

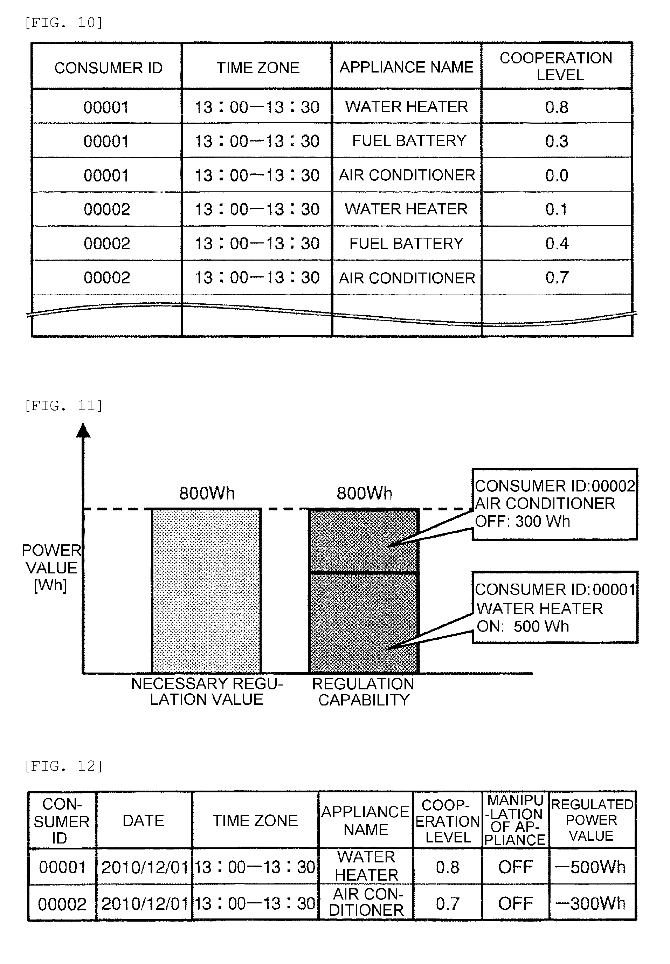

S0805 represents a demand regulation appliance extracting process. The demand regulation appliance is recorded in correlation with the cooperation level in the format shown in Fig. 10. The information of this format is set by a function (cooperation level determining function 0111) to be described later. Fig. 10 shows information in which the consumer ID, the time zone, the appliance name, and the cooperation level are correlated with each other. In this process (S0805), records in which the value of the cooperation level is matched with the value set in the loop process by cooperation levels of S0804 are sequentially extracted from Fig. 10. For example, when the cooperation level of the loop process of S0804 is 0.8, the first record (with a consumer ID of 00001, a time zone of 13:00 to 13:30, and an appliance name of water heater) of Fig. 10 is extracted in this process (S0805).

S0806 represents a regulation capability acquiring process in which data matched in consumer ID, time zone, and appliance name with the data extracted in S0805 is acquired from the data table shown in Fig. 7. The regulation capability of the record with a consumer ID of 00001, a time zone of 13:00 to 13:30, and an appliance name of water heater can be acquired to be -500 Wh from the table shown in Fig. 7.

S0807 represents an incentive setting process. The incentive is a profit which a consumer obtains from the operator of the demand regulation server when the consumer sets the appliances in response to the demand regulation request. As a method of setting the incentive, a method of allocating an incentive at a fixed ratio with respect to the demand regulation value, for example, like one point per 1 kWh of demand regulation value, can be considered. In this method, the incentive point allocated to the regulation value 500 Wh based on deactivation in the record with a consumer ID of 00001, a time zone of 13:00 to 13:30, and an appliance name of water heater is 0.5 points.

S0808 represents an adding process in which the regulation values extracted in S0805 are sequentially added.

In S0809, it is determined whether the regulation capability is sufficient for the necessary regulation value. This process will be described below with reference to Fig. 11. In Fig. 11, the horizontal axis represents the necessary regulation value over the overall community and the vertical axis represents the power value [Wh]. Here, an example of 13: 00 to 13:30 is shown. The necessary regulation value of this time zone is 800 Wh. On the other hand, as the regulation capability, 500 Wh of the case where the consumer ID is 00001 with a cooperation rate of 0.8 and the water heater is turned on is allocated. At this time, since the regulation capability is insufficient for the necessary regulation value, the regulation capability 300 Wh of the case where the consumer ID is 00002 with a cooperation rate of 0.7 and the water heater is turned off is added to 500 Wh to achieve regulation capability of 800 Wh. At this time, since the regulation capability for the necessary regulation value 800 Wh is 800 Wh, the regulation capability is determined to be sufficient. Since the necessary regulation value and the regulation capability are not necessarily matched with each other, a certain margin may be provided to the power in which the regulation capability is determined to be sufficient. For example, it can be thought that allowable error information between the necessary regulation value and the regulation capability is set in advance.

S0810 represents a recording process in which the countermeasure having the regulation capability processed in S0809 is recorded in the request record database shown in Fig. 12. In the description of S0809, as for the regulation request, since it is determined that the regulation capability is sufficient with the countermeasure of turning off the water heater for the consumer with an ID of 00001 and the countermeasure of turning off the air conditioner for the consumer with an ID of 00002, such information is recorded in the request record database. The request details recorded in the database are transmitted to the corresponding consumers.

Referring to Fig. 1 again, reference numeral 0111 represents a cooperation level determining function. The cooperation level is information obtained by quantifying the height of a cooperation sense with a demand regulation request and is a value in a range of 1.0 to 0.0. In this embodiment, two methods are described as the method of calculating the cooperation level. The first method is a method using a ratio of the number of times of cooperation to the number of times of demand regulation request in the past as an index. On the other hand, the second method is a method using behavior based on the cooperation sense of the consumer as an index. The first method will be first described below.

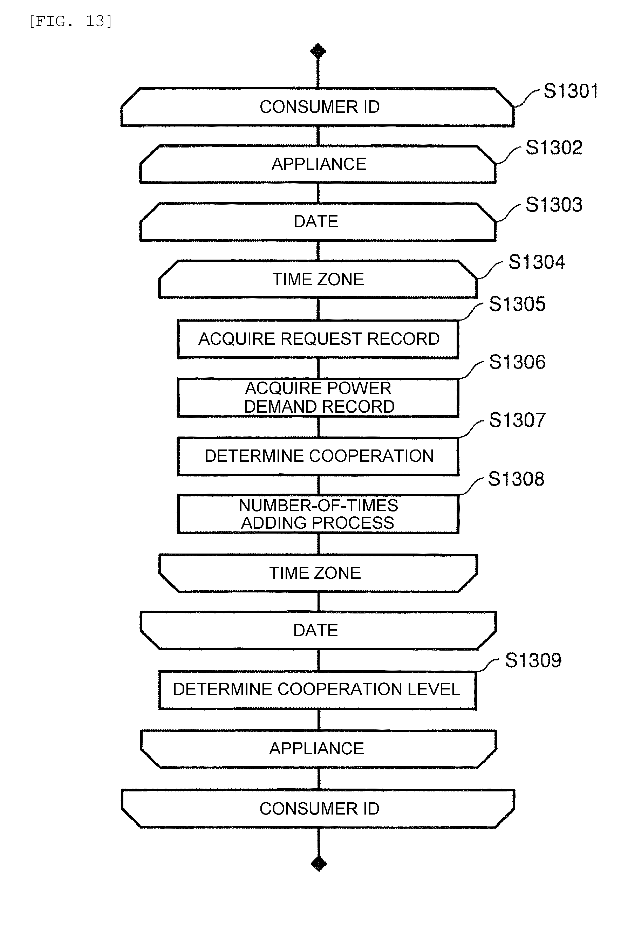

Fig. 13 is a flowchart illustrating the method of calculating a cooperation rate on the basis of the ratio of the number of times of cooperation to the number of times of request in the past, which is the first method.

S1301 represents a loop process by consumer IDs.

S1302 represents a loop process by appliances in which the types of consumer appliances such as a water heater, a fuel battery, and a storage battery are sequentially set.

S1303 represents a loop process by previous dates. The range of the loop can be set, for example, to three months to the past from the day just before the execution date.

S1304 represents a loop process by time zones. Here, the loop process is performed in the order of 00:00 to 00:30, 00:30 to 01:00, ... with 30 minutes as the time width.

S1305 represents a request record acquiring process. The previous request record is acquired from the information of the table shown in Fig. 12.

S1306 represents a power demand record acquiring process. The power demand record is recorded on the power demand record database 0102 in the format shown in Fig. 14.

S1307 represents a cooperation determining process. It is determined whether a consumer cooperates with a demand regulation request, by comparing information of the power demand record database 0102 with the request record database 0110.

(1) Demand Stimulation is Requested

When the demand stimulation is requested (when the sign of the power regulation value in Fig. 12 is plus) and when the magnitude [Wh] of the regulation power value in the request record database 0110 and the magnitude [Wh] of the power demand record in the power demand record database 0102 are matched with each other or have a difference within a range in which both are determined to be matched with each other as to records to which the consumer ID, the date, the time zone, and the appliance name are common, it is determined that the consumer cooperates with the request.

(2) Demand Restraint is Requested

When the demand restraint is requested (when the sign of the power regulation value in Fig. 12 is minus) and when the value in the power demand record database 0102 of a target appliance in the request record database 0110 is 0 [Wh] or is the value of the power demand in which the appliance is determined to be deactivated as to the records to which the consumer ID, the date, the time zone, and the appliance name are common, it is determined that the consumer cooperates with the request.

In both of (1) and (2), when it is determined that a consumer cooperates with a demand regulation request, the consumer ID, the date, the time zone, the appliance name, and the acquired incentive points are recorded in the format shown in Fig. 15.

In S1308, the number of times of determining that the corresponding consumer "cooperates with the request" is counted.

After the loop processes by dates and by time zones are performed on a certain consumer, the cooperation level is calculated in S1309. The cooperation level is calculated by the use of Expression 3.

[Math. 3]

$$Level = \frac{N1}{N0} \qquad\qquad \text{Expression 3}$$

Level represents the cooperation level, N1 represents the previous number of times [times] of cooperation of the corresponding consumer by appliances, and N0 represents the previous number of times [times] of request of the corresponding consumer by appliances. The request details and the calculated cooperation level are recorded in the format shown in Fig. 10.

The method using behavior based on the cooperation sense of a consumer as an index which is the second method of calculating a cooperation level will be described below. The height of the cooperation sense with a demand regulation request is considered to have a high correlation with the number of times of a consumer confirming the monitor of the consumer terminal. Therefore, the cooperation level is calculated on the basis of the number of times of display on the monitor of the consumer terminal.

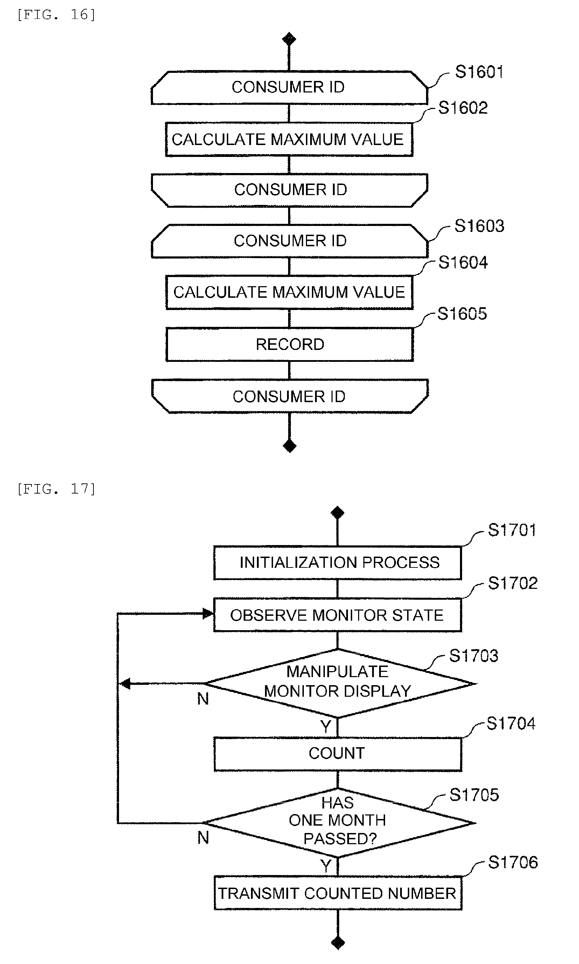

Fig. 16 is a flowchart illustrating the method using the height of the cooperation sense of a consumer as an index.

S1601 represents a loop process by consumer IDs.

S1602 represents a process of calculating the maximum value of the number of times of display on the monitor of a consumer terminal in all the consumers belonging to a community. The calculation of the number of times of display on the monitor of a consumer terminal will be described later (a display history managing function 0121).

In S1603, a loop process is performed by consumer IDs again.

In S1604, a cooperation level is calculated. The cooperation level is calculated by the use of Expression 4.

[Math. 4]

$$Level = \frac{N}{N\max} \qquad \text{Expression 4}$$

Here, Level represents the cooperation level, N represents the number of times [times] of display on the monitor of the corresponding consumer in a certain period (for example, one month), and Nmax represents the maximum value (times) of the number of times of display on the monitor of the consumer in all the consumers of the community.

S1605 represents a recording process in which the cooperation level calculated using Expression 4 is recorded in the format shown in Fig. 10. Since the value of the cooperation level is not a value for each appliance, the same value of cooperation level is set to the appliances of the same consumer.

Fig. 17 is a flowchart illustrating a function of counting the number of times of display on the monitor of a consumer terminal. This process is normally continuously performed.

S1701 represents an initialization process in which the previous count information or the like is cleared.

S1702 represents a monitor state observing process. In this process, the display state (ON or OFF) of the monitor is observed.

In S1703, it is determined whether a consumer manipulates the display on the monitor. When the consumer does not manipulate the display on the monitor, the flow of processes goes back to the observing of the monitor state in S1702. On the other hand, when the consumer manipulates the display on the monitor, 1 is counted up in S1704.

In S1705, it is determined whether a predetermined period elapses after the initialization process. Here, for example, it is determined whether one month elapses. When the elapsed time is less than one month, the flow of processes goes back to S1702. On the other hand, when one month elapses, the counted value is transmitted to the cooperation level determining function (0111 in Fig. 1).

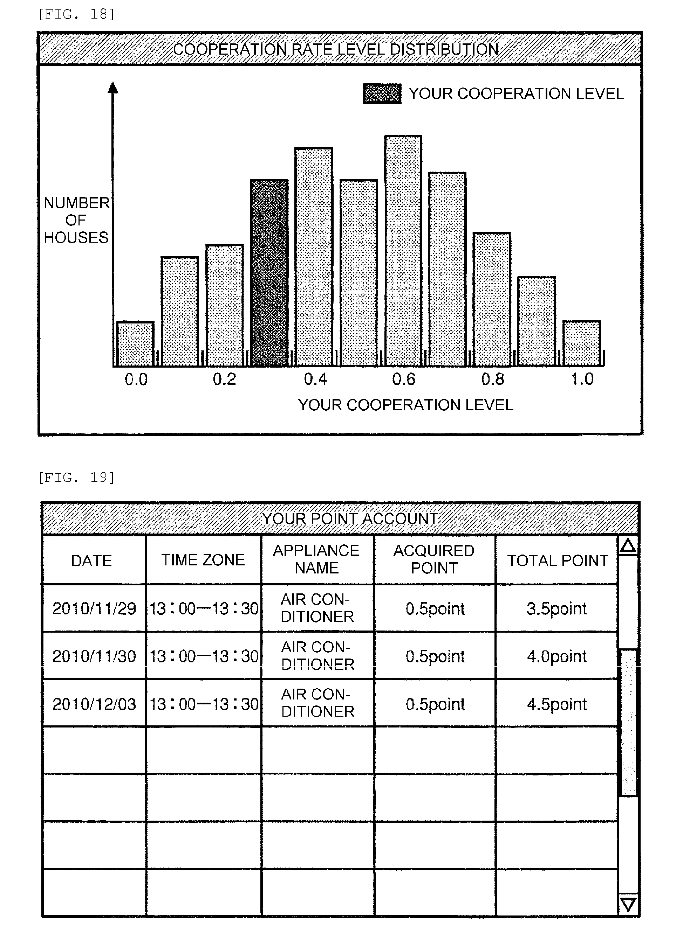

Figs. 18 and 19 show examples of information display on the monitor of a consumer terminal.

Fig. 18 shows an image of a cooperation level distribution in a community to which a consumer belongs. Information necessary for display can be acquired from the table shown in Fig. 10. When the cooperation level differs depending on consumer appliances, it can be thought that the maximum value of the cooperation levels is displayed. By displaying the cooperation level distribution in the community, it is thought that it is possible to raise the cooperation sense of a consumer with a demand regulation request.

Fig. 19 shows an image of account information of incentive points acquired by the corresponding consumer. Information necessary for display can be acquired from the table shown in Fig. 15. The value of the total point is a cumulative value from a certain time point.

Explaining principal points of the embodiment, since it is necessary to observe consumers surely responding to a request for reducing an amount of energy to be used and to transmit the request to only the consumers, the demand regulation server 0101 is provided with the "cooperation level determining function 0111" numerically expressing the height (cooperation level) of the cooperation sense of the consumer with the request for regulating an amount of energy to be used. The operator of the demand regulation server selects consumers or consumer appliances to be requested to regulate an amount of energy to be used on the basis of the magnitude of the cooperation level. Several types of methods of calculating the value of the cooperation level can be considered. The first method is a method using a ratio of the number of times of cooperation of a consumer with the request to the total number of times of request transmitted to the consumer (or the consumer appliance) in a predetermined period in the past. In another method, it is thought that the height of the cooperation sense of a consumer with the request for reducing an amount of energy to be used is highly correlated with the number of times of the consumer confirming the display function 0120 of the consumer terminal 0114. Therefore, a method of counting the number of times in which the consumer manipulates the consumer terminal and displays information on the display function 0120 for each consumer and calculating the cooperation rate in the form of a ratio of the counted value of the consumer to the maximum counted value of the consumers of the community can be also considered.

Accordingly, it is possible to shift a peak to a target regulation value with a high expected value. The operator of the demand regulation server can be prevented from distributing incentives more than necessary.

While the present invention has been described with reference to the embodiments, it will be apparently understood by those skilled in the art that the present invention is not limited to the embodiments and can be changed and modified in various forms without departing from the concept of the present invention and the scope of the appended claims.

Reference Signs List

> 0101: DEMAND REGULATION SERVER
> 0102: POWER DEMAND RECORD DATABASE
> 0103: POWER DEMAND PREDICTING FUNCTION
> 0104: WEATHER PREDICTION DATABASE
> 0105: PV POWER PREDICTING FUNCTION
> 0106: NECESSARY REGULATION VALUE CALCULATING FUNCTION
> 0107: EQUIPMENT INFORMATION DATABASE
> 0108: APPLIANCE REGULATION CAPABILITY CALCULATING FUNCTION
> 0109: REGULATION REQUEST CREATING FUNCTION
> 0110: REQUEST RECORD DATABASE
> 0111: COOPERATION LEVEL DETERMINING FUNCTION
> 0112: COMMUNICATION FUNCTION
> 0113: COMMUNICATION NETWORK
> 0114: CONSUMER TERMINAL
> 0115: COMMUNICATION FUNCTION
> 0116: REQUEST ACCEPTANCE EXCLUSION DETERMINING FUNCTION
> 0117: CONSUMER APPLIANCE
> 0118: MEASURING FUNCTION
> 0119: INPUT FUNCTION
> 0120: DISPLAY FUNCTION
> 0121: DISPLAY HISTORY MANAGING FUNCTION
> 0122: MEMORY FUNCTION

**Claims**

1. A power demand regulating apparatus that requests consumers to change setting states of appliances so as to level loads in a power distribution system on the basis of a predicted power demand,
   wherein the consumers to be requested to change the setting states of appliances are selected out of ranked consumers on the basis of the ranks of the ranked consumers and the selected consumers are requested to change the setting states of appliances.

2. The power demand regulating apparatus according to claim 1, wherein the ranks are ranks by consumers or consumer appliances and are determined using at least information of the previous number of times of cooperation of the consumers and the consumer appliances with a request.

3. The power demand regulating apparatus according to claim 1, wherein the power demand regulating apparatus is connected to consumer terminals via communication means and receives a count result of the number of times of activating an output function in a predetermined period from the consumer terminals.

4. The power demand regulating apparatus according to claim 3, wherein the ranks are determined on the basis of information, which is transmitted from the consumer terminals, of the number of times of activating the output function in the predetermined period.

5. A power regulating network system comprising:

a power demand regulating apparatus that requests consumers to change setting states of appliances; and a consumer terminal that performs a process of changing the setting states of appliances in response to the request from the power demand regulating apparatus, wherein the power demand regulating apparatus selects a consumer to be requested to change the setting states of appliances out of ranked consumers on the basis of the ranks of the ranked consumers and transmits the request to the selected consumer.

6. The power regulating network system according to claim 5, wherein the power demand regulating apparatus and the consumer terminal are connected to each other via communication means.

7. The power regulating network system according to claim 6, wherein the power demand regulating apparatus has a function of statistically processing ranks of a plurality of consumers and a function of transmitting the statistical processing result to the consumer terminal, and the consumer terminal has a function of receiving the statistical processing result and a function of outputting the statistic processing result to the consumer terminal.

8. The power regulating network system according to claim 6, wherein the power demand regulating apparatus has a function of giving an incentive to the consumer or a consumer responding to the request for changing the setting state of the consumer appliances, managing information of the given incentive, and transmitting the incentive information to the consumer terminal, and the consumer terminal has a function of receiving the information of the incentive transmitted from the power demand regulating apparatus and a function of outputting the incentive information.

9. A power demand regulating method comprising:

determining whether a predicted demand predicted from record information departs from a predetermined demand area; selecting a consumer to be requested to change setting states of appliances out of ranked consumers on the basis of the ranks of the ranked consumers when it is determined that the predicted demand departs from the predetermined demand area; and transmitting a request to the selected consumer.

[FIG. 1]

DEMAND REGULA-　0101
TION SERVER

WEATHER PREDICTION　0104

MEMORY FUNCTION　0122

EQUIPMENT INFORMATION　0107

PV POWER PREDICTING FUNCTION　0105

NECESSARY REGULATION VALUE CALCULATING FUNCTION　0106

APPLIANCE REGULATION CAPABILITY CALCULATING FUNCTION　0118

REGULATION REQUEST CREATING FUNCTION　0109

POWER DEMAND PREDICTING FUNCTION

POWER DEMAND RECORD　0103

COOPERATION LEVEL DETER-MINING FUNCTION　0111

REQUEST RECORD　0110

0102

COMMUNICATION FUNCTION　0112

0113

CONSUMER TERMINAL　0114

COMMUNICATION FUNCTION　0115

DISPLAY HISTORY MANAGING FUNCTION　0121

MEASURING FUNCTION　0118

APPLI-ANCE 1　0117

REQUEST ACCEPTANCE EXCLUSION DETERMINING FUNCTION　0116

MEASURING FUNCTION

APPLI-ANCE 2

INPUT FUNCTION　0119

OUTPUT FUNCTION　0120

......

MEASURING FUNCTION

APPLI-ANCE n

[FIG. 2]

```
                    ◆
         ┌─────────────────────────┐
         │  ACQUIRE THRESHOLD VALUE │ ─── S0201
         └─────────────────────────┘
      ┌─────────────────────────────┐
      │         TIME ZONE           │ ─── S0202
      └─────────────────────────────┘
       ┌───────────────────────────┐
       │        CONSUMER ID        │ ─── S0203
       └───────────────────────────┘
        ┌─────────────────────────┐
        │    APPLIANCE EQUIPMENT   │ ─── S0204
        └─────────────────────────┘
         ┌───────────────────────┐
         │   ACQUIRE PREDICTED    │ ─── S0205
         │     POWER DEMAND       │
         └───────────────────────┘
        ┌─────────────────────────┐
        │    APPLIANCE EQUIPMENT   │
        └─────────────────────────┘
         ┌───────────────────────┐
         │   ACQUIRE PREDICTED    │ ─── S0206
         │      PV POWER          │
         └───────────────────────┘
         ┌───────────────────────┐
         │  CALCULATE LOAD BALANCE│ ─── S0207
         └───────────────────────┘
       ┌───────────────────────────┐
       │        CONSUMER ID        │
       └───────────────────────────┘
         ┌───────────────────────┐
         │  CALCULATE NECESSARY   │ ─── S0208
         │   REGULATION VALUE     │
         └───────────────────────┘
         ┌───────────────────────┐
         │        RECORD          │ ─── S0209
         └───────────────────────┘
      ┌─────────────────────────────┐
      │         TIME ZONE           │
      └─────────────────────────────┘
                    ◆
```

[FIG. 3]

$P_0$ $P_1$ $P_2$

ESTIMATED
VALUE OF
LOAD BAL-
ANCE Wh ON
NEXT DAY

THRESHOLD
VALUE

12 : 30  13 : 00  13 : 30  14 : 00

TIME

[FIG. 4]

| TIME ZONE | NECESSARY REGU-LATION VALUE [Wh] |
|---|---|
| 00 : 00—00 : 30 | 0 |
| 00 : 30—01 : 00 | 0 |
| 13 : 00—13 : 30 | 800 |
| 23 : 30—00 : 00 | 0 |

13

[FIG. 5]

| CONSUMER ID | TIME ZONE | APPLIANCE NAME | PREDICTED POWER DEMAND |
|---|---|---|---|
| 00001 | 13：00－13：30 | WATER HEATER | ＋500Wh |
| 00001 | 13：00－13：30 | FUEL BATTERY | 0Wh |
| 00001 | 13：00－13：30 | AIR CONDITIONER | ＋200Wh |
| 00002 | 13：00－13：30 | WATER HEATER | ＋500Wh |
| 00002 | 13：00－13：30 | FUEL BATTERY | 0Wh |
| 00002 | 13：00－13：30 | AIR CONDITIONER | ＋300Wh |

[FIG. 6]

```
           ◆
   ┌─────────────────┐
   │    TIME ZONE    │ ─── S0601
   ├─────────────────┤
   │   CONSUMER ID   │ ─── S0602
   ├─────────────────┤
   │    APPLIANCE    │ ─── S0603
   ├─────────────────┤
   │ ESTIMATE REGULATION │ ─── S0604
   │    CAPABILITY    │
   ├─────────────────┤
   │ RECORDING PROCESS │ ─── S0605
   ├─────────────────┤
   │    APPLIANCE    │
   ├─────────────────┤
   │   CONSUMER ID   │
   ├─────────────────┤
   │    TIME ZONE    │
   └─────────────────┘
           ◆
```

[FIG. 7]

REMAINING REGULATION CAPABILITY

| CONSUM-ER ID | DATE | TIME ZONE | APPLIANCE NAME | MANIPU-LATION OF APPLIANCE | REGULATED POWER VALUE |
|---|---|---|---|---|---|
| 00001 | 2010/12/01 | 13：00—13：30 | WATER HEATER | OFF | —500Wh |
| 00001 | 2010/12/01 | 13：00—13：30 | FUEL BATTERY | ON | —500Wh |
| 00001 | 2010/12/01 | 13：00—13：30 | AIR CON-DITIONER | OFF | —200Wh |
| 00002 | 2010/12/01 | 13：00—13：30 | WATER HEATER | OFF | —500Wh |
| 00002 | 2010/12/01 | 13：00—13：30 | FUEL BATTERY | ON | —500Wh |
| 00002 | 2010/12/01 | 13：00—13：30 | AIR CON-DITIONER | OFF | —300Wh |
|  |  |  |  |  |  |

[FIG. 8]

```
                        ◆
            ┌─────────────────────────┐  ⟋ S0801
            │    ACQUIRE NECESSARY    │
            │    REGULATION VALUE     │
            └─────────────────────────┘
         ╱───────────────────────────────╲  ⟋ S0802
        │           TIME ZONE             │
         ╲───────────────────────────────╱
          ╱─────────────────────────────╲  ⟋ S0803
         │       QOL INFLUENCE LEVEL      │
          ╲─────────────────────────────╱
           ╱───────────────────────────╲  ⟋ S0804
          │      COOPERATION LEVEL       │
           ╲───────────────────────────╱
            ┌─────────────────────────┐  ⟋ S0805
            │ ACQUIRE COOPERATION LEVEL│
            └─────────────────────────┘
            ┌─────────────────────────┐  ⟋ S0806
            │   ACQUIRE REGULATION    │
            │      CAPABILITY         │
            └─────────────────────────┘
            ┌─────────────────────────┐  ⟋ S0807
            │     SET INCENTIVE       │
            └─────────────────────────┘
            ┌─────────────────────────┐  ⟋ S0808
            │     ADDING PROCESS      │
            └─────────────────────────┘
                   ╱◇╲   ⟋ S0809
              ╱─────────────────╲
         N   ╱     IS REG-        ╲   Y
        ┌───┤ ULATION CAPABILITY  ├───┐
        │    ╲   SUFFICIENT?     ╱    │
        │     ╲───────────────╱      │
  ╱─────────────────╲          ┌──────────────┐  ⟋ S0810
 │ COOPERATION LEVEL │         │    RECORD    │
  ╲─────────────────╱          └──────────────┘
  ╱─────────────────╲                 ◆
 │ QOL INFLUENCE LEVEL│
  ╲─────────────────╱
  ╱─────────────────╲
 │     TIME ZONE     │
  ╲─────────────────╱
```

[FIG. 9]

| QOL INFLUENCE LEVEL | APPLIANCE NAME |
|---|---|
| LEVEL 1 | WATER HEATER |
| LEVEL 2 | FUEL BATTERY |
| LEVEL 3 | AIR CONDITIONER |
|  |  |
|  |  |

[FIG. 10]

| CONSUMER ID | TIME ZONE | APPLIANCE NAME | COOPERATION LEVEL |
|---|---|---|---|
| 00001 | 13：00－13：30 | WATER HEATER | 0.8 |
| 00001 | 13：00－13：30 | FUEL BATTERY | 0.3 |
| 00001 | 13：00－13：30 | AIR CONDITIONER | 0.0 |
| 00002 | 13：00－13：30 | WATER HEATER | 0.1 |
| 00002 | 13：00－13：30 | FUEL BATTERY | 0.4 |
| 00002 | 13：00－13：30 | AIR CONDITIONER | 0.7 |

[FIG. 11]

[FIG. 12]

| CON-SUMER ID | DATE | TIME ZONE | APPLIANCE NAME | COOP-ERATION LEVEL | MANIPU-LATION OF AP-PLIANCE | REGULATED POWER VALUE |
|---|---|---|---|---|---|---|
| 00001 | 2010/12/01 | 13：00－13：30 | WATER HEATER | 0.8 | OFF | －500Wh |
| 00002 | 2010/12/01 | 13：00－13：30 | AIR CON-DITIONER | 0.7 | OFF | －300Wh |

[FIG. 13]

CONSUMER ID — S1301

APPLIANCE — S1302

DATE — S1303

TIME ZONE — S1304

ACQUIRE REQUEST RECORD — S1305

ACQUIRE POWER DEMAND RECORD — S1306

DETERMINE COOPERATION — S1307

NUMBER-OF-TIMES ADDING PROCESS — S1308

TIME ZONE

DATE

DETERMINE COOPERATION LEVEL — S1309

APPLIANCE

CONSUMER ID

[FIG. 14]

| CONSUMER ID | DATE | TIME ZONE | APPLIANCE NAME | POWER CONSUMPTION |
|---|---|---|---|---|
| 00001 | 2010/12/01 | 13：00－13：30 | WATER HEATER | 0Wh |
| 00001 | 2010/12/01 | 13：00－13：30 | FUEL BATTERY | －500Wh |
| 00001 | 2010/12/01 | 13：00－13：30 | AIR CON-DITIONER | ＋200Wh |
| 00002 | 2010/12/01 | 13：00－13：30 | WATER HEATER | ＋500Wh |
| 00002 | 2010/12/01 | 13：00－13：30 | FUEL BATTERY | －500Wh |
| 00002 | 2010/12/01 | 13：00－13：30 | AIR CON-DITIONER | 0Wh |
| | | | | |

[FIG. 15]

| CONSUMER ID | DATE | TIME ZONE | APPLIANCE NAME | ACQUIRED POINT |
|---|---|---|---|---|
| 00001 | 2010/12/01 | 13：00－13：30 | WATER HEATER | 0.5point |
| 00002 | 2010/12/01 | 13：00－13：30 | AIR CON-DITIONER | 0.3point |
| | | | | |

[FIG. 16]

```
        CONSUMER ID                    S1601
                                       S1602
    CALCULATE MAXIMUM VALUE

        CONSUMER ID

        CONSUMER ID                    S1603
                                       S1604
    CALCULATE MAXIMUM VALUE

            RECORD                     S1605

        CONSUMER ID
```

[FIG. 17]

```
     INITIALIZATION PROCESS            S1701
                                       S1702
      OBSERVE MONITOR STATE

            MANIPULATE                 S1703
         MONITOR DISPLAY
      N
                    Y
              COUNT                    S1704

              HAS                      S1705
           ONE MONTH
            PASSED?
      N
                    Y
     TRANSMIT COUNTED NUMBER           S1706
```

[FIG. 18]

COOPERATION RATE LEVEL DISTRIBUTION

YOUR COOPERATION LEVEL

NUMBER OF HOUSES

0.0    0.2    0.4    0.6    0.8    1.0

YOUR COOPERATION LEVEL

[FIG. 19]

| YOUR POINT ACCOUNT | | | | |
|---|---|---|---|---|
| DATE | TIME ZONE | APPLIANCE NAME | ACQUIRED POINT | TOTAL POINT |
| 2010/11/29 | 13：00—13：30 | AIR CON-DITIONER | 0.5point | 3.5point |
| 2010/11/30 | 13：00—13：30 | AIR CON-DITIONER | 0.5point | 4.0point |
| 2010/12/03 | 13：00—13：30 | AIR CON-DITIONER | 0.5point | 4.5point |
| | | | | |
| | | | | |
| | | | | |
| | | | | |

## INTERNATIONAL SEARCH REPORT

| | International application No. |
|---|---|
| | PCT/JP2011/069781 |

### A. CLASSIFICATION OF SUBJECT MATTER
*H02J3/00*(2006.01)i, *G06Q10/00*(2006.01)i, *G06Q50/00*(2006.01)i

According to International Patent Classification (IPC) or to both national classification and IPC

### B. FIELDS SEARCHED

Minimum documentation searched (classification system followed by classification symbols)
H02J3/00, G06Q10/00, G06Q50/00

Documentation searched other than minimum documentation to the extent that such documents are included in the fields searched
Jitsuyo Shinan Koho        1922–1996    Jitsuyo Shinan Toroku Koho    1996–2011
Kokai Jitsuyo Shinan Koho    1971–2011    Toroku Jitsuyo Shinan Koho    1994–2011

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X <br> A | JP 2008-295193 A (Nippon Telegraph and Telephone Corp.), 04 December 2008 (04.12.2008), claim 1; paragraphs [0039], [0048]; fig. 1, 3 (Family: none) | 1,2,5,6,8,9 <br> 3,4,7 |
| A | JP 2009-247043 A (The Chugoku Electric Power Co., Inc.), 22 October 2009 (22.10.2009), entire text; all drawings (Family: none) | 1-9 |
| A | JP 2002-176729 A (Hitachi, Ltd.), 21 June 2002 (21.06.2002), entire text; all drawings (Family: none) | 1-9 |

☐ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search <br> 09 November, 2011 (09.11.11) | Date of mailing of the international search report <br> 22 November, 2011 (22.11.11) |
|---|---|
| Name and mailing address of the ISA/ <br> Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2007334523 A